# EUROPÄISCHE PATENTSCHRIFT

(11) **EP 1 063 750 B1**
(45) Veröffentlichungstag und Bekanntmachung des Hinweises auf die Patenterteilung: **19.06.2002**
(21) Anmeldenummer: 00890154.8
(22) Anmeldetag: 12.05.2000
(51) Int. Cl.: H02K 5/22

(54) **Steckerteil für das kontaktieren der Drähte von Statorwicklungen eines Elektromotors**
Plug in part for connection of the wires of the windings of a stator of an electric motor
Pièce enfichable pour la connexion des fils d'enroulements statoriques d'un moteur électrique

(30) Priorität: 22.06.1999 AT 110099
(43) Veröffentlichungstag der Anmeldung: 27.12.2000
(73) Patentinhaber: ATB Austria Antriebstechnik Aktiengesellschaft, 8724 Spielberg (Steiermark) (AT)
(72) Erfinder: Muhrer, Robert, 8724 Spielberg (AT); Sand, Hansjörg, 8724 Spielberg (AT)
(74) Vertreter: Hehenberger, Reinhard, Dipl.-Ing.

(56) Entgegenhaltungen:
- EP-A- 0 029 328
- EP-A- 0 107 025
- EP-A- 0 484 313
- US-A- 4 476 407
- US-A- 5 175 458

## Beschreibung

Die Erfindung betrifft einen Steckerteil für das Kontaktieren der Drähte von Statorwicklungen eines Elektromotors mit den Merkmalen des einleitenden Teils von Anspruch 1.

Ein in der CH 669 073 A beschriebener Stecker wird nicht an der Wicklung eines Stators festgelegt, sondern auf einem Führungssteg des Motorflansches aufgesteckt und besteht aus einem Unterteil und einem Deckel. Ein gesonderter Steckhülsenträger, also ein Bauteil, der vom Fußteil, der am Stator festgelegt ist, getrennt ist, ist bei der CH 669 073 A nicht vorgesehen.

Die in der EP 0 107 025 A beschriebene Verbindungsvorrichtung besteht aus einem Steckergehäuse mit Unterteil und Oberteil, wobei der Unterteil mit schwalbenschwanzförmigen Führungsteilen in Nuten am äußeren Umfang eines Ständerblechpaketes vor dem Anlegen eines Lagerschildes eingeschoben wird. Der Unterteil des am Blechpaket gehaltenen Steckergehäuses besitzt bei der EP 0 107 025 A Fixiergabeln, in denen die Spulenenden aufgenommen und dann zu Steckerstiften, die im Unterteil angeordnet sind, geführt werden. Wesentlich ist, daß bei der EP 0 107 025 A die Fixiergabeln ausschließlich zum Aufnehmen der Statorwicklungsenden, nicht aber zum Festlegen des Steckerteils am Motor dienen, da dies mit Hilfe von Führungsteilen erfolgt, die in die Nuten im Statorpaket eingeschoben werden.

Ein Steckerteil für das Kontaktieren der Drähte von Statorwicklungen eines Elektromotors mit den Merkmalen des einleitenden Teils von Patentanspruch 1 ist aus der EP 0 484 313 B bekannt. Dieser bekannte Steckerteil ist ein einstückiger Kunststoff-Spritzgußteil, der einen Fuß aufweist, der zwei vorspringende Zinken, die an den voneinander abgekehrten Seiten benachbarter Nutisolierungen anliegen, und einen Vorsprung aufweist, der zwischen den beiden Zinken angeordnet ist, und der zwischen benachbarte Nutisolierungen eingreift. In dem Steckerteil sind Kontakte eingesetzt, mit welchen die Statorwicklungen bildenden (Lack-)Drähte unmittelbar elektrisch leitend verbunden sind.

Der aus der EP 0 484 313 B bekannte Steckerteil hat sich an sich bewährt, manchmal ergeben sich jedoch Probleme, den Steckerteil mit Hilfe seines Fußes an den Nutisolierungen der Statorwicklung festzulegen, wenn die Wicklungsköpfe bereits vernäht und verformt worden sind.

Ein weiterer Nachteil besteht bei dem aus der EP 0 484 313 B bekannten Steckerteil darin, daß das elektrisch leitende Verbinden der Wicklungsdrähte des Elektromotors mit den Kontakten im Steckerteil nicht ohne weiteres möglich ist, da die Aufnahmen für die Steckhülsen, mit welchen die Wicklungsdrähte elektrisch leitend verbunden werden müssen, schlecht zugänglich sind.

Der Erfindung liegt die Aufgabe zugrunde, einen Steckerteil der eingangs genannten Gattung anzugeben, dessen Fußteil schon vor dem Verformen und dem Vernähen der Wicklungsköpfe von Statorwicklungen eines Elektromotors ansetzbar ist und bei dem das Kontaktieren der Wicklungsdrähte einfacher als bisher durchgeführt werden kann.

Gelöst wird diese Aufgabe mit einem Steckerteil der eingangs genannten Gattung, der sich durch die im kennzeichnenden Teil von Anspruch 1 genannten Merkmale auszeichnet.

Bevorzugte und vorteilhafte Ausgestaltungen des erfindungsgemäßen Steckerteils sind Gegenstand der Unteransprüche.

Da der erfindungsgemäße Steckerteil zweiteilig ist und einen Fußteil und einen an diesem festlegbaren Steckhülsenträger aufweist, der seinerseits aus einem Unterteil und einem am Unterteil festlegbaren Oberteil besteht, besteht die Möglichkeit zunächst nur den Fußteil des Steckerteils gemäß der Erfindung am Stator festzulegen, dann die Wicklungsköpfe zu vernähen und zu verformen. Danach wird der Steckhülsenteil mit dem Fußteil verbunden. Schließlich werden die Lackdrähte, welche die Statorwicklung bilden, mit den Steckhülsen elektrisch leitend zu verbunden, die Steckhülsen im Steckhülsenträger festgelegt und dann den Steckhülsenträger durch seinen Oberteil geschlossen.

In einer bevorzugten Ausführungsform ist der Steckhülsenträger gegenüber dem Fußteil um etwa 90° verschwenkbar, so daß der Steckhülsenträger aus einer vom Stator nach außen abstehenden Stellung, das ist die Stellung in der in ihm die Steckhülsen eingesetzt werden, in eine parallel zur Achse des Statorpaktes ausgerichtete Lage verschwenkt werden kann.

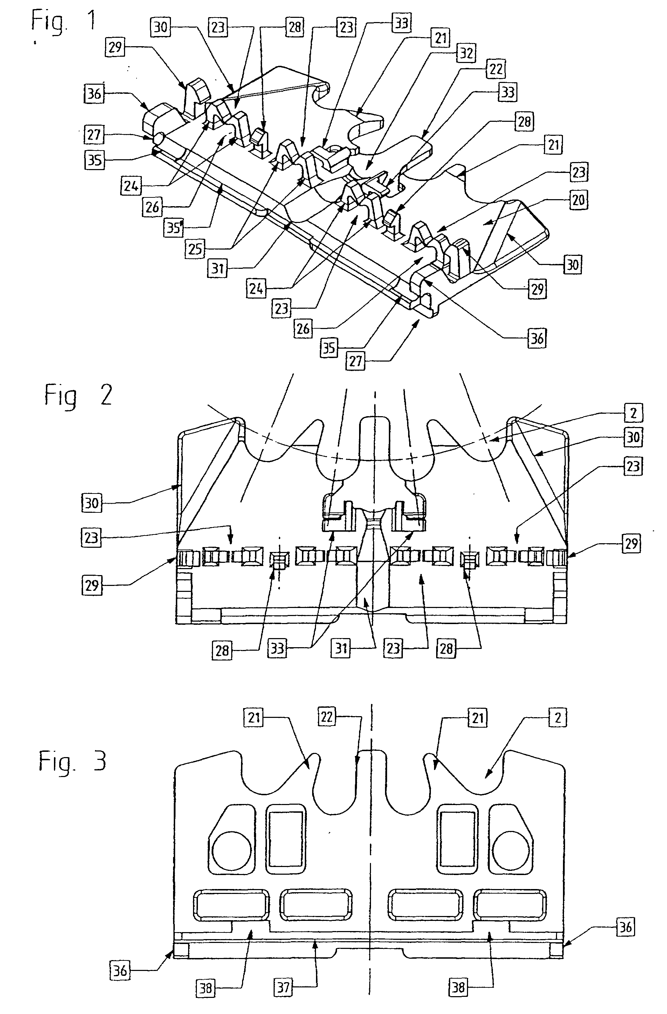

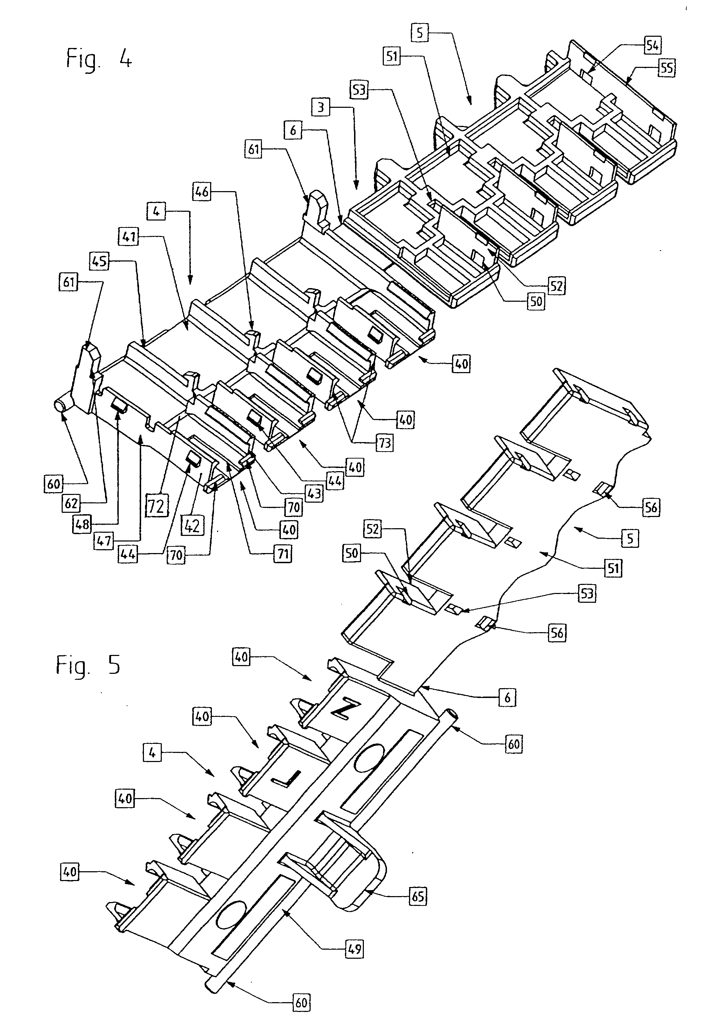

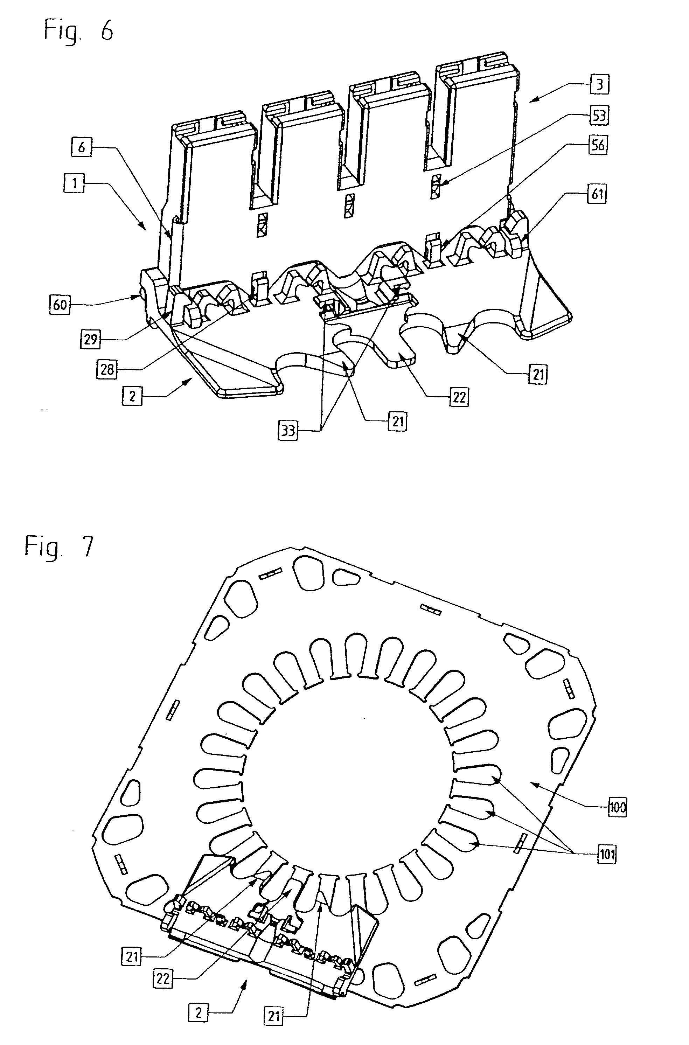

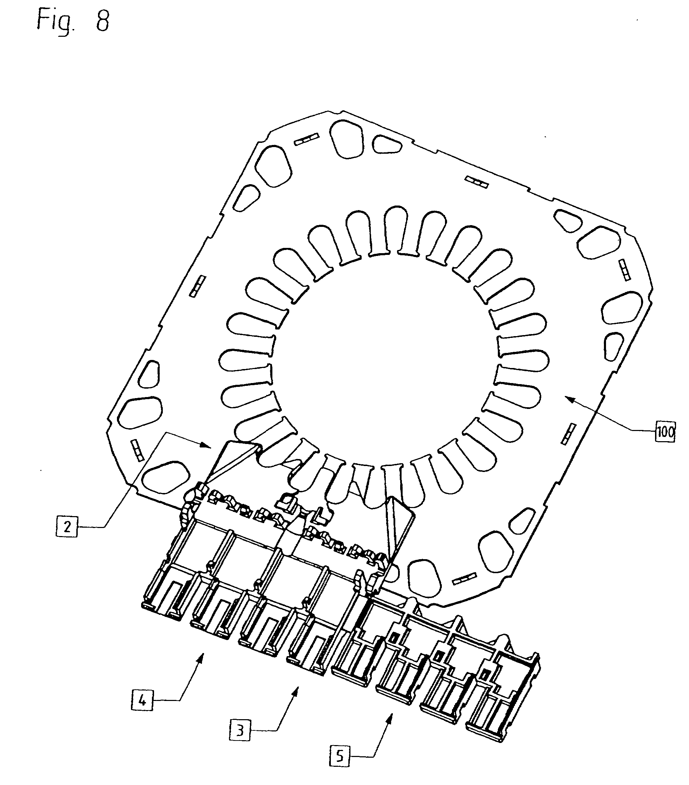

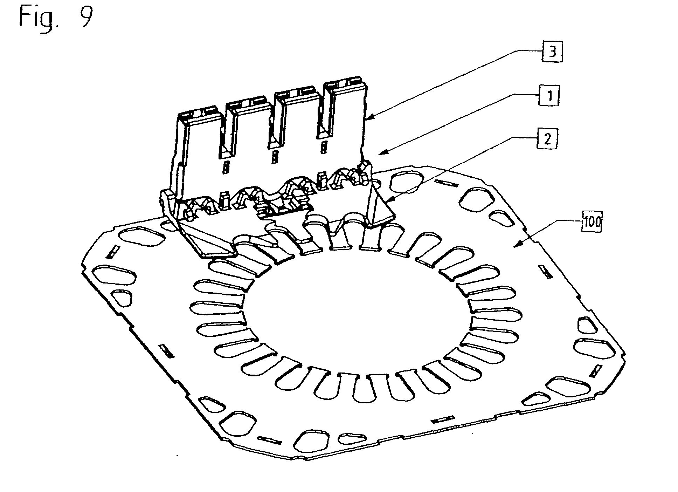

Weitere Merkmale, Einzelheiten und Vorteile des erfindungsgemäßen Steckerteils ergeben sich aus der nachstehenden Beschreibung eines bevorzugten Ausführungsbeispieles der Erfindung anhand der Zeichnungen. Es zeigt: Fig. 1 in Schrägansicht einen Fußteil des Steckerteils, Fig. 2 eine Draufsicht auf den Fußteil aus Fig. 1, Fig. 3 eine Unteransicht des Fußteils aus Fig. 1, Fig. 4 den Steckhülsenträger in Schrägansicht in aufgeklapptem Zustand, Fig. 5 den Steckhülsenträger in aufgeklapptem Zustand von unten gesehen, Fig. 6 den Steckerteil in Schrägansicht mit an dem Fußteil angesetztem, geschlossenem Steckhülsenträger, Fig. 7 in Schrägansicht ein Statorblech mit angesetztem Fußteil in Schrägansicht, Fig. 8 in Schrägansicht den am Fußteil angesetzten, offenen Steckhülsenträger und Fig. 9 den Steckerteil in Gebrauchslage mit geschlossenem und verschwenktem Steckhülsenträger.

Der erfindungsgemäße Steckerteil 1 besteht aus einem Fußteil 2 und einem Steckhülsenträger 3, der aus einem Unterteil 4 und einem Oberteil 5 besteht.

Der Fußteil 2 besitzt eine Grundplatte 20. Die Grundplatte 20 besitzt an einem Längsrand zwei Zinken 21 und zwischen diesen einen Vorsprung 22, die an benachbarten Isolierungen einer (nicht gezeigten) Statorwicklung reib- und formschlüssig angesetzt werden können, wobei die Nutisolierungen zwischen den Zinken 21 und dem Vorsprung 22 aufgenommen sind.

Von der in Fig. 1 und 2 sichtbaren Oberseite des Fußteils 2 stehen Hakenpaare 23 mit je zwei Haken 24 ab. Die Enden 25 der Haken 24 sind einander nahe benachbart, so daß zu Steckhülsen zu führende und mit diesen elektrisch leitend zu verbindende Drähte, beispielsweise die Lackdrähte von Statorwicklungen von oben her zwischen den Haken 24 in den darunter befindlichen Aufnahmeraum 26 hineingedrückt werden können. Die Enden 25 der Haken 24 haben bevorzugt einen Abstand voneinander, der etwas kleiner ist als der Durchmesser der Lackdrähte, die Statorwicklungen bilden. So können diese leicht in die von den Haken 24 begrenzten Aufnahmeräume 26 hineingedrückt werden.

Dies ist insbesondere von Vorteil, da bereits vorher an den Enden der Drähte Steckhülsen beispielsweise durch Aufkrimpen festgelegt werden können.

Wie die Fig. 1 und 2 zeigen, sind im Ausführungsbeispiel am Fußteil 2 insgesamt vier Paare 23 von Haken 24 vorgesehen.

An dem den Zinken 21 und dem Vorsprung 22 gegenüberliegenden Rand der Grundplatte 20 des Fußteils 2 sind Lager 27 vorgesehen, die aus Lagerhälften 35 und 36 bestehen. In den Lagen 27 sind zur verschwenkbaren Lagerung des Steckhülsenträgers 3 Lagerzapfen 60 aufgenommen.

Des weiteren sind am Fußteil 2, von dessen Oberseite abstehend Rasthaken 28 vorgesehen, die in Rastausnehmungen 56 im Steckhülsenträger 3 eingreifen, nachdem dieser am Fußteil 2 festgelegt und gegenüber diesen beispielsweise um 90° in die in den Fig. 6 und 9 gezeigte Lage verschwenkt worden ist.

Weitere Rasthaken 29 sind im Bereich der Seitenränder der Grundplatte 20 des Fußteils 2 vorgesehen, die mit Rastzungen 61 des Steckhülsenträgers 3 verrasten, wenn dieser in die Stellung nach Fig. 6 oder 9 verschwenkt worden ist.

Im Bereich der beiden Seitenränder und in der Mitte der Grundplatte 20 des Fußteils 2 sind Vertiefungen 30 und 31 vorgesehen. Diese Vertiefungen 30 und 31 haben den Zweck, die Bewegungen von Nadel(n), mit welchen die Wicklungsköpfe der Statorwicklungen vernäht werden, nicht zu behindern, auch wenn der Fußteil 2 (vgl. Fig. 7) am Stator durch Aufschnappen an benachbarte Nutisolierungen schon befestigt worden ist.

In der Oberseite der Grundplatte 20 des Fußteils 2 ist eine Vertiefung 32 ausgenommen, in deren Bereich zwei sich parallel zur Grundplatte 20 des Fußteils 2 voneinander weg erstreckende, von der Grundplatte 20 einen Abstand aufweisende Zungen 33 vorgesehen sind. Diese Vertiefung 32 und die Zungen 33 haben den Zweck, einen Draht aufzunehmen und festzuhalten, wenn im Steckerteil 1, insbesondere im Fußteil 2 desselben eine Schaltung, beispielsweise die Verschaltung eines Kondensators aufgenommen werden soll.

Wenngleich die Lager 27 in Fig. 1 so ausgebildet sind, daß die unteren Lagerhälften 35 innerhalb der von der Oberseite der Grundplatte 20 des Fußteiles 2 abstehenden oberen Lagerhälften 36 enden, ist eine Ausführungsform denkbar, bei der die unteren Lagerhälften 35 bis zu den Seitenrändern der Grundplatte 20 des Fußteils 2 reichen, also den oberen Lagerhälften 35 gegenüberliegend enden.

Der in den Fig. 4 und 5 gezeigte Steckhülsenträger 3 besteht aus einem Unterteil 4 und einem Oberteil 5. Im gezeigten Ausführungsbeispiel ist der Oberteil 5 mit dem Unterteil 4 über ein Filmscharnier 6 verbunden. So kann der Oberteil 5 durch Verschwenken auf den Unterteil 4 niedergeklappt und der Steckhülsenträger 3 geschlossen werden, nachdem in ihm Steckhülsen festgelegt worden sind.

In einer abgeänderten Ausführungsform kann der Oberteil 5 ein vom Unterteil 4 des Steckhülsenträgers 3 getrennter Bauteil sein, der nach Art eines Deckels auf den Unterteil 4 aufgesetzt und beispielsweise mit diesem verrastet wird.

Im gezeigten Ausführungsbeispiel des Steckhülsenträgers 3 sind im Unterteil 4 des Steckhülsenträgers 3 entsprechend den vier Hakenpaaren 23 am Fußteil 2 des Steckerteils 1 vier Aufnahmeräume 40 für Steckhülsen (nicht gezeigt) vorgesehen. Jeder Aufnahmeraum 40 ist beidseitig von Wänden 42 und 43 begrenzt, die von der Basisplatte 41 des Unterteils 4 des Steckhülsenträgers 3 nach oben abstehen. Die Wände 42 tragen an ihrer Außenseite jeweils eine Rastnase 44, die bei geschlossenem Steckhülsenträger 3 in Rastausnehmungen 50 eingreifen. Die Rastausnehmungen 50 sind in den Wänden 52, die von der Deckplatte 51 des Oberteils 5 abstehen, ausgespart.

Um den Oberteil 5 des Steckhülsenträgers 1 sicher am Unterteil 4 festzulegen, sind zwischen einander benachbarten Wänden 42, 43 der Aufnahmeräume 40 für Steckhülsen an von der Basisplatte 41 des Unterteils 4 abstehenden Wänden 45 Rasthaken 46 vorgesehen. Die Rasthaken 46 greifen in Rastaussparungen 53 in der Deckplatte 51 des Oberteils 5 ein, wenn der Oberteil 5 auf den Unterteil 4 des Steckhülsenträgers 3 geklappt ist.

Schließlich ist an der vom Filmscharnier 6, das den Unterteil 4 mit dem Oberteil 5 des Steckhülsenträgers 3 gelenkig verbindet, abgekehrten Wand 47 eine Rastnase 48 vorgesehen. Die Rastnase 48 greift in eine Rastaussparung 54 an der seitlichen Wand 55 des Oberteils 5 des Steckhülsenträgers 3 ein, wenn der Steckhülsenträger 1 geschlossen ist.

An einem, nämlich dem dem Fußteil 2 zugeordneten Rand der Basisplatte 41 des Unterteils 4 des Steckhülsenträgers 3 ist ein Wulst 49 vorgesehen, der unter Ausbildung der Lagerzapfen 60 über die Seiten des Unterteils 4 des Steckhülsenträgers 1 vorsteht. Mit Hilfe des Wulstes 49 und der beiden Lagerzapfen 60 kann der Steckhülsenträger 3 in den Lagern 27 des Fußteils 2 verschwenkbar festgelegt werden. Vorzugsweise ist dabei die Dimensionierung des Wulstes 49 und der Lagerzapfen 60 am Steckhülsenträger 3 einerseits und die der Lager 27 am Fußteil 2 anderseits so gewählt, daß der Steckhülsenträger 3 durch einfaches Einschnappen der Zapfen 60 und des Wulstes 49 in die Lager 27 am Fußteil 2 eingesetzt werden kann. Wenn, wie im Ausführungsbeispiel, die untere Lagerhälfte 35 am Fußteil 2 im wesentlichen über die gesamte Länge des Fußteiles 2 durchgehend ausgebildet ist, wird bei ungehinderter Verschwenkbarkeit des Steckhülsenträgers 3 ein besonders sicherer Sitz des Steckhülsenträgers 3 am Fußteil 2 gewährleistet.

Wenn der am Fußteil 2 angesetzte und gegenüber diesem verschwenkbare Steckhülsenträger 3 in die in den Fig. 6 und 9 gezeigte Stellung verschwenkt worden ist, greifen einerseits die an den Seitenrändern des Fußteils 2 vorgesehenen Rasthaken 29 über die Rastzungen 61 des Steckhülsenträgers 3 und anderseits die zwischen zwei Hakenpaaren 23 angeordneten Rasthaken 28 des Fußteils 2 in die Rastausnehmungen 56 im Oberteil 5 des Steckhülsenträgers 3 ein. So wird nicht nur die in Fig. 6 gezeigte Gebrauchslage des erfindungsgemäßen Steckerteils 1 - der Steckhülsenträger 3 schließt mit dem Fußteil 2 einen Winkel von 90° ein - gesichert, sondern es wird auch die geschlossene Stellung des Steckhülsenträgers 3 - auf den Unterteil 4 geklappter Oberteil 5 des Steckhülsenträgers 3 - durch die Rasthaken 28 gesichert, da diese in den Rastausnehmungen 56 eingerastet sind.

Um den Sitz des erfindungsgemäßen Steckerteils 1 am Stator eines Elektromotors zu verbessern, kann an der Unterseite der Grundplatte 20 des Fußteils 2 eine längslaufende Rippe 37 mit zwei Paaren von Vorsprüngen 38, die in Richtung der Zinken 21 weisen, vorgesehen sein.

Um den Sitz des Steckerteils 1 in axialer Richtung zu sichern, ist bei der in den Zeichnungen gezeigten Ausführungsform (siehe Fig. 5) an der Außenseite des Unterteils 4 des Steckhülsenträgers 3 eine Kralle 65 vorgesehen, die sich an einem Bauteil des Elektromotors, insbesondere an einer entsprechenden Nase eines Lagerschildes abstützt. So ist der Sitz des Steckerteils 1 am Elektromotor auch dann gewährleistet, wenn in die Steckhülsen eingesetzte Stecker aus dem einen oder anderen Grund einmal abgezogen werden müssen.

Die Aufnahmeräume 40 für Steckhülsen im Unterteil 4 des Steckhülsenträgers 3 sind nach vorne durch zwei zwischen sich einen Freiraum freilassende Rippen 70 begrenzt. In der Basisplatte 41 des Unterteils 4 des Steckhülsenträgers 3 ist in der Mitte jedes Aufnahmeraumes 40 eine Vertiefung 71 vorgesehen, in der die Federzungen von Steckhülsen einrasten können. So können Steckhülsen von links der Fig. 4 aus gesehen in Aufnahmeräume 40 eingeschoben werden, bis die Steckhülse mit ihrem vorderen Ende an den Rippen 70 anliegt, wobei gleichzeitig die Feder der Steckhülse am inneren Ende 72 der Vertiefung 71 anliegt. Das Herausrutschen der Steckhülsen aus den Aufnahmeräumen 40 nach oben wird durch Halterippen 73 verhindert. In dem in Fig. 4 gezeigten Ausführungsbeispiel sind diese Halterippen 73 oben abgeschrägt, so daß Steckhülsen auch von oben her in Aufnahmeräume 40 eingedrückt werden können. Dies erlaubt eine besonders einfache Montage bzw. ein einfaches Einsetzen von Steckhülsen in die Aufnahmeräume 40, da zunächst keine Schlaufe im Lackdraht der Statorwicklung gebildet werden muß.

Die Aufnahmeräume 40 im Steckhülsenträger 3 dienen zur Aufnahme von Steckhülsen für das Kontaktieren der Hauptphasenwicklung, der Hilfsphasenwicklung und allenfalls eines Kondensators.

Von Vorteil ist, daß die Steckhülsen bei der Verwendung des erfindungsgemäßen Steckerteils 1 ohne Zwischenschaltung von Litzen unmittelbar an den Wicklungsdrähten angesetzt werden können. So entfällt das aufwendige Ankrimpen von Litzen an Lackdrähten von Statorwicklungen.

Nachstehend wird anhand der Fig. 7 bis 9 das Kontaktieren einer Statorwicklung mit Hilfe eines erfindungsgemäßen Steckerteils 1 erläutert. Der einfacheren Darstellung wegen ist das Statorpaket eines Elektromotors ausschließlich durch ein Statorblech 100 symbolisiert und es sind die in den Nuten 101 des Statorblechpaketes angeordneten Statorwicklung und die Nutisolierungen nicht dargestellt.

Zunächst wird ein Fußteil 2 des erfindungsgemäßen Steckerteils 1 am Statorpaket 100 so angesetzt, daß sein Vorsprung 22 zwischen zwei Nutisolierungen eingreift und die beiden Zinken 21 an den Nutisolierungen, zwischen denen der Vorsprung 22 aufgenommen ist, von außen her anliegen. Die Lage des Fußteils 2 des erfindungsgemäßen Steckerteils 1 am Statorblechpaket 100 wird in radialer Richtung durch die Rippe 37 mit ihren Vorsprüngen 38 (Fig. 3) gesichert. Nachdem der Fußteil 2 angesetzt worden ist, können die Wicklungsköpfe der Statorwicklung genäht und verformt werden. Dabei werden die Bewegungen der Nadeln beim Nähen der Wicklungsköpfe dank der Vertiefungen 30 und 31 im Fußteil 2 nicht behindert.

Als nächster Schritt wird der noch offene Steckhülsenteil 3 des erfindungsgemäßen Steckerteils 1 an den Fußteil 2 angesetzt, indem der Wulst 49 mit den Lagerzapfen 60 in die Lager 27 (gebildet durch die Lagerhälften 35 und 36) am Fußteil 2 eingeschnappt wird. Es ist dann die Stellung gemäß Fig. 8 erreicht.

In dieser Stellung werden die zu kontaktierenden Drähte auf die entsprechende Länge zugeschnitten, durch Ankrimpen mit Steckhülsen bestückt, die Drähte in die Aufnahmeräume 26 zwischen jeweils zwei Haken 24 am Fußteil 2 hineingedrückt und die Steckhülsen in Aufnahmeräumen 40, beispielsweise durch Eindrücken von oben her, fesgelegt.

Nachdem dies geschehen ist, wird der Oberteil 5 des Steckhülsenträgers 3 auf den Unterteil 4 geklappt und an diesem durch Eingreifen der Rastnasen 44, 46, 48 in die Rastausnehmungen 50, 53, 54 in der geschlossenen Stellung festgelegt.

Als letzter Schritt wird der geschlossene Steckhülsenträger 3 in die in Fig. 9 gezeigte Stellung verschwenkt, bis die Rasthaken 29 über den Rastzungen 61 und die Rasthaken 28 in die Rastausnehmungen 56 einrasten.

Zusammenfassend kann ein Ausführungsbeispiel der Erfindung wie folgt dargestellt werden:

Ein Steckerteil 1 für das Kontaktieren der Drähte der Statorwicklung eines Elektromotors, besitzt einen Fußteil 2, der mit Hilfe von Zinken 21 und einem Vorsprung 22 an zwei benachbarten Nutenisolierungen festlegbar ist. Der Steckerteil 1 weist weiters einen Steckhülsenträger 3 auf, der ein vom Fußteil 2 getrennter Bauteil ist und der an dem Fußteil 2 lösbar und verschwenkbar festgelegt werden kann. Der Steckhülsenträger 3 besteht aus einem Unterteil 4 mit Aufnahmen 40 für Steckhülsen und aus einem Oberteil 5, der zum Verschließen der Aufnahmen 40 für Steckhülsen auf den Unterteil 4 des Steckhülsenträgers 3 umklappbar und durch Verrasten festlegbar ist. Der Fußteil 2 des Steckerteils 1 kann zunächst ohne Steckhülsenträger 3 an einem Stator befestigt werden noch bevor die Wicklungsköpfe genäht und verformt werden. Erst dann wird der Steckhülsenträger 3 am Fußteil 2 befestigt. Die Steckhülsen werden unmittelbar an den Lackdrähten von Statorwicklungen aufgekrimpt und in die Aufnahmen 40 im Steckhülsenträger 3 eingerastet.

## Patentansprüche

1. Steckerteil (1) für das Kontaktieren der Drähte von Statorwicklungen von Elektromotoren, wobei der Steckerteil (1) einen Fußteil (2) aufweist, der mit Hilfe von vorspringenden Zinken (21) und einem Vorsprung (22) an benachbarten Nutenisolierungen festlegbar ist, und wobei im Steckerteil (1) Kontakte, insbesondere Steckhülsen, einsetzbar sind, an welchen die Drähte von Statorwicklungen angeschlossen werden, **dadurch gekennzeichnet, daß** der Steckerteil (1) einen vom Fußteil (2) gesonderten Steckhülsenträger (3) aufweist, der an dem mit Hilfe der vorspringenden Zinken (21) und des Vorsprunges (22) am Stator festlegbaren Fußteil (2) lösbar festlegbar ist, und daß der Steckhülsenträger (3) einen Unterteil (4) mit Aufnahmen (40) für Steckhülsen und einen Oberteil (5) aufweist, der zum Verschließen der Aufnahmen (40) für Steckhülsen am Unterteil (4) des Steckhülsenträgers (3) festlegbar ist.

2. Steckerteil nach Anspruch 1, **dadurch gekennzeichnet, daß** in der Grundplatte (20) des Fußteils (2) Vertiefungen (30, 31) vorgesehen sind, die Freiräume für Nadeln zum Vernähen der Wicklungsköpfe von Statorwicklungen bilden.

3. Steckerteil nach Anspruch 1 oder 2, **dadurch gekennzeichnet, daß** der Steckhülsenträger (3) gegenüber dem Fußteil (2) um eine Achse verschwenkbar ist, die im Bereich des den Zinken (21) und dem Vorsprung (22) gegenüberliegenden Rand des Fußteils (2) im Bereich des den Aufnahmen (40) für die Steckhülsen gegenüberliegenden Randes des Steckhülsenträgers (3) liegt.

4. Steckerteil nach Anspruch 3, **dadurch gekennzeichnet, daß** am Fußteil (2) Lager (27) für am Steckhülsenträger (3) ausgebildete Lagerzapfen (60), die über die Seitenwände des Steckhülsenträgers (3) vorstehen, vorgesehen sind.

5. Steckerteil nach Anspruch 4, **dadurch gekennzeichnet, daß** am Unterteil (4) des Steckhülsenträgers (3) ein gleichachsig zu den Lagerzapfen (60) angeordneter, über die gesamte Länge des Unterteils (4) des Steckhülsenträgers (3) durchgehender Wulst (49) mit einem Querschnitt gleich dem Querschnitt der Lagerzapfen (60), die über die Seitenwände des Steckhülsenträgers (3) vorstehen, vorgesehen ist.

6. Steckerteil nach Anspruch 4 oder 5, **dadurch gekennzeichnet, daß** die Lager (27) am Fußteil (2) von zwei an den Lagerzapfen (60) anliegenden Lagerhälften (35, 36) und gegebenenfalls durch eine über die Länge des Fußteils (2) vorzugsweise durchgehend ausgebildete, an dem Wulst (49) anliegende Lagerwanne (35') gebildet sind.

7. Steckerteil nach einem der Ansprüche 1 bis 6, **dadurch gekennzeichnet, daß** am Fußteil (2) Rasthaken (28) vorgesehen sind, die in Rastausnehmungen (56) im Steckhülsenträger (3) eingreifen, wenn dieser mit dem Fußteil (2) einen Winkel von 90° einschließt.

8. Steckerteil nach Anspruch 7, **dadurch gekennzeichnet, daß** die Rastausnehmungen (56) im Oberteil (5) des Steckhülsenträgers (3) vorgesehen sind.

9. Steckerteil nach einem der Ansprüche 1 bis 8, **dadurch gekennzeichnet, daß** von der Grundplatte (20) des Fußteils (2) mehrere aus je zwei Haken (24) bestehende Hakenpaare (23) abstehen, wobei zwischen den Haken (24) Aufnahmeräume (26) für Drähte von Statorwicklungen vorgesehen sind.

10. Steckerteil nach Anspruch 9, **dadurch gekennzeichnet, daß** die freien Enden (25) der Haken (24) voneinander einen Abstand aufweisen, der kleiner ist als der Durchmesser von Wicklungsdrähten.

11. Steckerteil nach einem der Ansprüche 1 bis 10, **dadurch gekennzeichnet, daß** in der Grundplatte (20) des Fußteils (2) eine Vertiefung (32) ausgespart ist, an deren Rand zwei Niederhaltezungen (33), die sich parallel zur Grundplatte (20) des Fußteiles (2) erstrecken, vorgesehen sind.

12. Steckerteil nach einem der Ansprüche 1 bis 11, **dadurch gekennzeichnet, daß** die Aufnahmen (40) für Steckhülsen im Unterteil (4) des Steckhülsenträgers (3) seitlich von je zwei Wänden (42, 43) begrenzt sind.

13. Steckerteil nach einem der Ansprüche 1 bis 12, **dadurch gekennzeichnet, daß** zwischen benachbarten Aufnahmen (40) von der Basisplatte (41) des Unterteils (4) des Steckhülsenträgers (3) nach oben abstehende Wände (45) vorgesehen sind.

14. Steckerteil nach einem der Ansprüche 1 bis 13, **dadurch gekennzeichnet, daß** die Aufnahmen (40) für Steckhülsen im Unterteil (4) des Steckhülsenträgers (3) auf der der Schwenkachse des Steckhülsenträgers (3) gegenüberliegenden Seite durch Rippen (70) begrenzt sind.

15. Steckerteil nach einem der Ansprüche 12 bis 14, **dadurch gekennzeichnet, daß** an den oberen Enden der seitlichen Wände (42, 43) jeder Aufnahme (40) für eine Steckhülse Niederhalterippen (73) vorgesehen sind.

16. Steckerteil nach Anspruch 15, **dadurch gekennzeichnet, daß** die Niederhalterippen (73) an ihrer Oberseite abgeschrägt sind.

17. Steckerteil nach einem der Ansprüche 13 bis 16, **dadurch gekennzeichnet, daß** an den von der Basisplatte (41) des Unterteils (4) des Steckhülsenträgers (3) nach oben abstehenden Wänden (45) Rasthaken (46) vorgesehen sind, denen Rastaussparungen (53) in der Deckplatte (51) des Oberteils (5) zugeordnet sind.

18. Steckerteil nach Anspruch 17, **dadurch gekennzeichnet, daß** an der Außenseite einer (42) der Begrenzungswände (42, 43) der Aufnahmen (40) für Steckhülsen eine Rastnase (44) vorgesehen ist, denen Rastaussparungen (50) in von der Deckplatte (51) des Oberteils (5) abstehenden Wänden (52) zugeordnet sind.

19. Steckerteil nach einem der Ansprüche 1 bis 18, **dadurch gekennzeichnet, daß** von der Unterseite des Unterteils (5) des Steckhülsenträgers (3) eine Nase (65) absteht, die an einem Bauteil des Elektromotors in axialer Richtung abgestützt ist.

20. Steckerteil nach einem der Ansprüche 1 bis 19, **dadurch gekennzeichnet, daß** von der an der Stirnfläche des Statorpaketes aufliegenden Seite der Grundplatte (20) des Fußteils (2) eine Rippe (37) absteht, die außen am Statorblechpaket (100) anliegt.

21. Steckerteil nach Anspruch 20, **dadurch gekennzeichnet, daß** an der Rippe (37) zu den Zinken (21) hin weisende Vorsprünge (38) vorgesehen sind.

## Claims

1. Plug-in part (1) for contacting of the wires of the stator windings of electric motors, the plug-in part (1) having a foot part (2) which can be fixed to adjacent groove insulations by means of projecting teeth (21) and a projection (22), and contacts, particularly plug-in sockets, being able to be inserted in the plug-in part (1), to which contacts the wires of stator windings are connected, **characterised in that** the plug-in part (1) has a plug-in socket carrier (3) which is separate from the foot part (2), which carrier can be detachably fixed to the foot part (2) by means of the projecting teeth (21) and the projection (22), said foot part being fixable to the stator, and **in that** the plug-in socket carrier (3) has a lower paxt (4) having receiving means (40) for plug-in sockets and an upper part (5) which can be fixed to the lower part (4) of the plug-in socket carrier (3) in order to lock the receiving means (40) for plug-in sockets.

2. Plug-in part according to claim 17 **characterised in that**, in the baseplate (20) of the foot part (2), recesses (30, 31) are provided, which form free spaces for needles in order to sew the end windings of stator windings.

3. Plug-in part according to claim 1 or 2, **characterised in that** the plug-in socket carrier (3) situated opposite the foot part (2) is pivotable about an axis which is situated in the region of the edge of the foot part (2), which edge is situated opposite the teeth (21) and the projection (22), in the region of the edge of the plug-in socket carrier (3), which edge is situated opposite the receiving means (40) for the plug-in sockets.

4. Plug-in part according to claim 3, **characterised in that** bearings (27) are provided on the foot part (2) for the bearing journals (60) which are formed on the plug-in socket carrier (3) and project over the side walls of the plug-in socket carrier (3).

5. Plug-in part according to claim 4, **characterised in that**, on the lower part (4) of the plug-in socket carrier (3), a bead (49) is provided which is disposed coaxially to the bearing journals (60) and is continuous over the entire length of the lower part (4) of the plug-in socket carrier (3), said bead having a cross-section equal to the cross-section of the bearing journals (60) which project over the side walls of the plug-in socket carrier (3).

6. Plug-in part according to claim 4 or 5, **characterised in that** the bearings (27) on the foot part (2) are formed from two bearing halves (35, 36), which abut on the bearing journals (60), and if necessary by means of a bearing trough (35') which is formed over the length of the foot part (2), preferably continuously, and abuts on the bead (49).

7. Plug-in part according to one of the claims 1 to 6, **characterised in that** catching hooks (28) are provided on the foot part (2) and engage in catching recesses (56) in the plug-in socket carrier (3), when the latter forms an angle of 90° to the foot part (2).

8. Plug-in part according to claim 7, **characterised in that** the catching recesses (56) are provided in the upper part (5) of the plug-in socket carrier (3).

9. Plug-in part according to one of the claims 1 to 8, **characterised in that** a plurality of pairs of hooks (23), each pair comprising two hooks (24), projects from the baseplate (20) of the foot part (2); receiving spaces (26) being provided between the hooks (24) for wires of stator windings.

10. Plug-in part according to claim 9, **characterised in that** the free ends (25) of the hooks (24) have a spacing from each other which is smaller than the diameter of winding wires.

11. Plug-in part according to one of the claims 1 to 10, **characterised in that** a recess (32) is recessed in the baseplate (20) of the foot part (2), on the edge of which recess two holding-down tongues (33) are provided which extend parallel to the baseplate (20) of the foot part (2).

12. Plug-in part according to one of the claims 1 to 11, **characterised in that** the receiving means (40) for plug-in sockets in the lower part (4) of the plug-in socket carrier (3) are delimited laterally by two walls (42, 43) respectively.

13. Plug-in part according to one of the claims 1 to 12, **characterised in that** walls (45) are provided between adjacent receiving means (40) of the bottom plate (41) of the lower part (4) of the plug-in socket carrier (3) and project upwardly.

14. Plug-in part according to one of the claims 1 to 13, **characterised in that** the receiving means (40) for plug-in sockets in the lower part (4) of the plug-in socket carrier (3) are delimited by ribs (70) on the side which is situated opposite the pivotal axis of the plug-in socket carrier (3).

15. Plug-in part according to one of the claims 12 to 14, **characterised in that** holding-down ribs (73) are provided on the upper ends of the side walls (42, 43) of each receiving means (40) for a plug-in socket.

16. Plug-in part according to claim 15, **characterised in that** the holding-down ribs (73) are bevelled on their upper side.

17. Plug-in part according to one of the claims 13 to 16, **characterised in that** catching hooks (46) are provided on the walls (45) which project upwardly from the bottom plate (41) of the lower part (4) of the plug-in socket carrier (3), catching recesses (53) in the cover plate (51) of the upper part (5) being assigned to said catching hooks.

18. Plug-in part according to claim 17, **characterised in that** a catching nose (44) is provided on the exterior of one (42) of the delimiting walls (42, 43) of the receiving means (40) for plug-in sockets, catching recesses (50) in the walls (52) which project from the cover plate (51) of the upper part (5) being assigned to said catching nose.

19. Plug-in part according to one of the claims 1 to 18, **characterised in that** a nose (65) projects from the lower side of the lower part (5) of the plug-in socket carrier (3) and is supported in the axial direction on a component of the electric motor.

20. Plug-in part according to one of the claims 1 to 19, **characterised in that** a rib (37) projects from the side of the baseplate (20) of the foot part (2), which side is situated on the front face of the stator bundle, and which rib abuts on the stator lamination bundle (100) externally.

21. Plug-in part according to claim 20, **characterised in that** projections (38) are provided on the rib (37) and are orientated towards the teeth (21).

## Revendications

1. Elément de connecteur (1) pour l'établissement des contacts des fils d'enroulements statoriques de moteurs électriques, l'élément de connecteur (1) comprenant une partie de base (2) positionnable à l'aide de dents (21) saillantes et d'une saillie (22) sur des isolations d'encoches voisines, et des contacts réalisés en particulier sous forme de douilles de connexion, auxquels sont raccordés les fils des enroulements statoriques, pouvant être insérés dans l'élément de connecteur (1), **caractérisé par le fait que** l'élément de connecteur (1) comprend un support de douilles de connexion (3) qui est séparé de la partie de base (2) et peut être relié de façon amovible à la partie de base (2) positionnable à l'aide des dents (21) saillantes et de la saillie (22) sur le stator, et que le support de douilles de connexion (3) comprend une partie inférieure (4) avec des logements (40) pour des douilles de connexion et une partie supérieure (5) positionnable sur la partie inférieure (4) en vue de la fermeture des logements (40) pour des douilles de connexion.

2. Elément de connecteur suivant la revendication 1, **caractérisé par le fait que** la plaque de base (20) de la partie de base (2) présente des creux (30, 31) formant des espaces libres pour des aiguilles pour la couture des têtes de bobines des enroulements statoriques.

3. Elément de connecteur suivant la revendication 1 ou 2, **caractérisé par le fait que** le support de douilles de connexion (3) peut pivoter par rapport à la partie de base (2) autour d'un axe situé dans la zone du bord de la partie de base (2) qui est opposé aux dents (21) saillantes et à la saillie (22) dans la zone du bord du support de douilles de connexion (3) qui est opposé aux logements (40).

4. Elément de connecteur suivant la revendication 3, **caractérisé par le fait que** la partie de base (2) présente des paliers (27) pour des tourillons (60) formés sur le support de douilles de connexion (3) de manière à faire saillie sur les parois latérales du support de douilles de connexion (3).

5. Elément de connecteur suivant la revendication 4, **caractérisé par le fait que** la partie inférieure (4) du support de douilles de connexion (3) comporte un bourrelet (49) qui est aligné avec les tourillons (60), qui s'étend en continu sur toute la longueur de la partie inférieure (4) du support de douilles de connexion (3) et qui présente la même section que les tourillons (60) faisant saillie sur les parois latérales du support de douilles de connexion (3).

6. Elément de connecteur suivant la revendication 4 ou 5, **caractérisé par le fait que** les paliers (27) sur la partie de base (2) sont formés par deux moitiés de paliers (35, 36) appliquées contre les tourillons (60) et le cas échéant par une rainure (35') s'étendant préférablement de façon continue sur toute la longueur de la partie de base (2) et appliquée contre le bourrelet (49).

7. Elément de connecteur suivant l'une des revendications 1 à 6, **caractérisé par le fait que** la partie de base (2) comporte des crochets d'encliquetage (28) qui s'engagent dans des évidements d'encliquetage (56) dans le support de douilles de connexion (3) lorsque ce dernier fait un angle de 90° avec la partie de base (2).

8. Elément de connecteur suivant la revendication 7, **caractérisé par le fait que** les évidements d'encliquétage (56) sont disposés dans la partie supérieure (5) du support de douilles de connexion (3).

9. Elément de connecteur suivant l'une des revendications 1 à 8, **caractérisé par le fait que** plusieurs paires de crochets (23) comprenant chacune deux crochets (24) dépassent de la plaque de base (20) de la partie de basé (2), des espaces de réception (26) pour des fils d'enroulements statoriques étant prévus entre les crochets (24).

10. Elément de connecteur suivant la revendication 9, **caractérisé par le fait que** les extrémités libres (25) des crochets (24) présentent entre elles une distance qui est inférieure au diamètre des fils des enroulements.

11. Elément de connecteur suivant l'une des revendications 1 à 10, **caractérisé par le fait que** dans la plaque de base (20) de la partie de base (2) est ménagé un creux (32) sur le bord duquel sont prévues deux languettes de retenue (33) qui s'étendent parallèlement à la plaque de base (20) de la partie de base (2).

12. Elément de connecteur suivant l'une des revendications 1 à 11, **caractérisé par le fait que** les logements (40) pour les douilles de connexion dans la partie inférieure (4) du support de douilles de connexion (3) sont délimités latéralement chacun par deux parois (42, 43).

13. Elément de connecteur suivant l'une des revendications 1 à 12, **caractérisé par le fait que** des parois (45) dépassant vers le haut de la plaque de base (41) de la partie de base (4) sont prévues entre des logements (40) voisins.

14. Elément de connecteur suivant l'une des revendications 1 à 13, **caractérisé par le fait que** les logements (40) pour les douilles de connexion dans la partie inférieure (4) du support de douilles de connexion (3) sont délimités par des nervures (70) sur le côté opposé à l'axé de pivotement du support de douilles de connexion (3).

15. Elément de connecteur suivant l'une des revendications 12 à 14, **caractérisé par le fait que** des nervures de retenue (73) sont prévaes aux extrémités supérieures des parois latérales (42, 43) de chaque logement (40) pour une douille de connexion.

16. Elément de connecteur suivant la revendication 15, **caractérisé par le fait que** les nervures (73) de retenue sont chanfreinées sur leur côté supérieur.

17. Elément de connecteur suivant l'une des revendications 13 à 16, **caractérisé par le fait que** sur les parois (45) dépassant vers le haut de la plaque de base (41) de la partie de base (4) sont prévus des crochets d'encliquetage (46) auxquels sont associés des évidements d'encliquetage (53) dans la plaque de couverture (51) de la partie supérieure (5).

18. Elément de connecteur suivant la revendication 17, **caractérisé par le fait que** l'une (42) des parois de délimitation (42, 43) des logements (40) pour les douilles de connexion présente sur le côté extérieur un nez d'encliquetage (44) auquel est associé un évidement d'encliquetage (50) dans une paroi (52) dépassant de la plaque de couverture (51) de la partie supérieure (5).

19. Elément de connecteur suivant l'une des revendications 1 à 18, **caractérisé par le fait qu'**un nez (65) qui prend appui en direction axiale sur un composant du moteur électrique dépasse du côté inférieur de la partie inférieure (5) du support de douilles de connexion (3).

20. Elément de connecteur suivant l'une des revendications 1 à 19, **caractérisé par le fait qu'**une nervure (37) qui est appliquée extérieurement sur le paquet de tôles statorique (100) dépasse du côté de la plaque de base (20) de la partie de base (2) qui est appliqué contre le côté frontal du paquet statorique.

21. Elémerit de connecteur suiontla revendication 20, **caractérisé par le fait que** des saillies (38) dépassantes vers les dents (21) sont preuves dans la nervure (37).
